# EUROPEAN PATENT APPLICATION

(11) **EP 2 876 601 A2**
(43) Date of publication of application: **27.05.2015**
(21) Application number: 14183409.3
(22) Date of filing: 03.09.2014
(51) Int. Cl.: G06T 3/40, G09B 21/00, H04N 1/195, H04N 5/225, H04N 5/232, H04N 5/235

(54) **Vision enhancing device**

(30) Priority: 03.09.2013 NL 2011373
(71) Applicant: Optelec Development B.V., 2993 LT Barendrecht (NL)
(72) Inventor: van Hees, Lukas Wilhelmus, 2993 LT Barendrecht (NL)
(74) Representative: Jansen, Cornelis Marinus

(57) **Abstract**

A Low Vision enhancing device for recording an object whereon text and/or at least one picture are visible and for displaying the recorded object on a screen, said vision enhancing device being provided with:
- an object presenting unit comprising a bottom plate carrying a table for supporting an object to be displayed on a screen, said table being mounted to the bottom plate so as to be displaceable in at least opposite directions in a horizontal plane;
- an upstanding stand attached to the bottom plate;
- a light sensitive sensor mounted to the upstanding stand for obtaining recording signals of the object which signals are indicative for the text and/or the at least one picture of the object;
- processing means for processing the recording signals into video signals; and
- a screen preferably mounted to the upstanding stand, which screen, in use, is provided with the video signals for displaying an image of the recorded object on the screen; characterized in that the upstanding stand is arranged to be positioned at a left or right side of the light sensitive sensor and/or the screen if the device is viewed from a user position in front of the screen.

## Description

### BACKGROUND OF THE INVENTION

The present invention relates to a vision enhancing device for recording an object whereon text and/or at least one picture are visible, and for displaying the recorded object on a screen, said vision enhancing device being provided with:
- an object presenting unit comprising a bottom plate carrying a table for supporting an object to be displayed on a screen, said table being mounted to the bottom plate so as to be displaceable in at least two opposite directions in a horizontal plane;
- an upstanding stand attached to the bottom plate;
- a light sensitive sensor mounted to the upstanding stand for obtaining recording signals of the object, which signals represent an image of text and/or at least one picture on the object;
- processing means for processing the recording signals into video signals; and
- a screen, which, in use, is provided with the video signals for displaying an image of the recorded object on the screen.

Such a vision enhancing device is known in practice and is for example sold under the name "Optelec Clearview 2004-2012 generation" and is used by visually impaired persons. The object may for example be a newspaper or a magazine, comprising text and/or at least one picture. In use, the object is usually positioned on a flat table surface of the object presenting unit below the light sensitive sensor. By means of the light sensitive sensor the object is recorded and an image of the recorded object is projected on the screen. Also the sensor may comprise a zoom lens to enlarge the image for better viewing of certain parts of the text and/or at least one picture on the screen. By means of the processing means it is furthermore possible to enlarge or otherwise modify the image for better viewing of certain parts of the text and/or at least one picture. To position the object optimally with respect to the light sensitive sensor the object can be moved relative to the image field of the light sensitive sensor by displacing the table surface relative to the bottom plate in two opposite directions in a horizontal plane. Although the known vision enhancing enhancing device works more than satisfactory with objects having an A4 or letter size, using the vision enhancing enhancing device also for larger objects, such as e.g. having an A3 size or objects having larger length dimensions, requires a relative bulky vision enhancing enhancing device having a large passive, i.e. stow away footprint. Furthermore, when handling objects having a larger size, , there exists a risk that the position of the object is changed involuntarily e.g. by unintentionally touching the object.

Also there is a large (perceived) footprint, especially with regards to the area behind the monitor. Furthermore the position of stand at the back together with the position of the light sensitive sensor often causes the light sensitive sensor to look at the bottom part of the object in the starting position of the table, this has the following implications: 1. The table has to move towards the user if the user wants to read the top of the object, in this case the table movement can be limited if a user is closely positioned to the table 2. a document that has a larger length dimension than A4 or letter, for instance some newspapers, have to be folded over a horizontal axis in order to read the whole document 3. For a user who reads from top to bottom, it is illogical to start at the bottom of the page. Moreover, when using the light sensitive sensor for providing an overview image on the of objects having a larger size, such as for example A3, the light sensitive sensor needs zoom factors in a relatively large range. For example a zoom factor 1 is required for providing the overview and zoom factors 3:54 or 1.5: 28 for providing an enlarged image of a selected portion of the object on the screen. Thus a relatively large and thereby costly zoom range is required such as a zoom range from 1-52 or 1-28.Furthermore getting a full overview also requires either positioning the light sensitive sensor further away from the original object, which can have negative consequences on the design of the system, or a special lens is required, which can add additional costs and can have a negative impact on the image quality.

### OBJECTS OF THE INVENTION

It is therefore an object of the invention to provide an improved vision enhancing enhancing device which meets at least some and possibly each of the above indicated problems.

### SUMMARY OF THE INVENTION

In accordance with an aspect of the invention the vision enhancing device is characterized in that the upstanding stand is arranged to be positioned at a left or right side of the sensor and/or (a middle of) the screen (when viewed from a user position in front of the screen). Thus the upstanding stand is arranged to be positioned at a left or right side of (a middle of) the screen or sensor if the device is viewed from a user position in front of the screen and/or if the screen is mounted to the stand and viewed from a user position in front of the screen. This aspect of the invention is based on the insight that the problems related to the known vision enhancing device are at least partly the result of the fact that the stand is positioned behind the screen when viewed from the user. This positioning behind the screen requires a large depth of the vision enhancing device for displacing the table, especially when using large objects, having a length dimension larger than letter or a4 format, which makes the vision enhancing device bulky and requires a large desktop for supporting the vision enhancing device. By positioning the upstanding stand at a side, i.e. at a left or right side of the screen, the vision enhancing device can be arranged to have less depth, making it easier to move the table top forward and backward, i.e. away from or toward the user, respectively. In addition this arrangement provides a perception of free space and potentially a perceived smaller footprint as when using a monitor, for instance with a screen diagonal of 22 inch or 24 inch, the perceived width of the system is determined by the width of the monitor. Preferably at least an upstanding arm of the stand can be said to be complete on the left side (or the right side) of the sensor and/or the middle of the screen.

In a special embodiment the vision enhancing device comprises a stand which is displaceably mounted to the bottom plate in a direction from left to right or vice versa (when viewed from a position in front of the screen) in a horizontal direction parallel to the screen. In another embodiment the screen is displaceably mounted to the stand for displacing the screen relative to the stand in two opposite directions parallel to the screen. Such special embodiments enable reducing the footprint for stowaway or for use with relatively small objects such as A4 paper. In such embodiments preferably the vision enhancing device comprises first releasable tightening means arranged for, when tightened, fixing the position of the stand relative to the bottom plate and for, when released, allowing displacement of the stand relative to the bottom plate. More preferably the vision enhancing device comprises second releasable tightening means arranged for , when tightened, fixing the position of light sensitive sensor and/or the screen relative to the stand and for, when released, allowing displacement of the screen relative to the stand. In an advantageous embodiment the vision enhancing device can be realized in a compact manner when the upstanding stand is C-shaped and comprises a lower substantially horizontal arm, an upstanding arm and a substantially horizontal upper arm, wherein the bottom plate is provided with a connecting member for connecting the lower arm of the C-shaped upstanding stand to the bottom plate.

According to another aspect of the invention the vision enhancing device is characterized in that the device comprises at least one first table top which is removably mounted to the table, said first table top being arranged for supporting an object to be displayed on the screen.

This aspect of the invention is based on the insight that the problems related to the known vision enhancing device are at least partly the result of the fact that the supporting surface of the table for supporting an object to be displayed on a screen is fixedly attached to the object presenting table, thereby reducing the flexibility of the vision enhancing device. By removably mounting a first table top to the table, the flexibility of the vision enhancing device according to the invention can be improved, as a result of which it can be possible to use the vision enhancing device for objects of various sizes.

In an advantageous embodiment of a vision enhancing device according to the invention the device comprises interchangeable first and second table tops arranged for supporting an object to be displayed on the screen, said second table top being arranged for being removably mountable to the table. In this manner it is possible to change between table tops that are adapted to the size of the object, while the passive footprint of the vision enhancing device can remain relatively small, e.g. by removing a table top from the table. It is then particularly advantageous when the first table top has a first width dimension and a first length dimension, preferably being able to hold a A4 or Letter sized document and wherein the second table top has a second length dimension and a second width dimension, preferably being able to hold A3 sized documents. Preferably the vision enhancing device is arranged for allowing displacement of the table relative to the bottom plate and for allowing displacement of the stand relative to the bottom plate for obtaining a footprint which is formed by all possible positions of a respective table top relative to the bottom plate which is about twice the surface area of the respective table top. Thus the table can preferably at least be displaced relative to the bottom plate over its own full length and width. In particular when used with interchangeable table tops, such a displaceable mounting of the stand can readily convert the vision enhancing device from an operating position having a large footprint, e.g. when using objects having A3 size, to a stowaway position having a relatively small footprint, and vice versa.

In a user friendly embodiment the vision enhancing device according to the invention further comprises a user control input unit for controlling at least part of the operation of the vision enhancing device, said user control input unit being mounted to the table, which comprises a recess for docking the user control input unit. By providing the control unit on the table and e.g. not in the housing of the screen or located nearby the screen, a user of the vision enhancing device can place an object on the table top, position the object together with the table top in a desired position and control the operation of the vision enhancing device without lifting his or her hands from the table. In particular when the user control input unit is removably mounted to the table, said user control input unit preferably being a wireless user control input unit, the operation of the vision enhancing device can be very user friendly. Since the user control input unit is not hard-wired to the table but only has its cradle on the table, the user control input unit can also be used when not positioned in the table. In this manner it is possible in a preferred embodiment of the invention to provide e.g. control buttons on all sides of the user control input unit. Thus preferably the user control input unit is provided with two opposite sides wherein each side is provided with at least one control button and wherein the vision enhancing device is arranged such that the control input unit can be inserted in the recess such that upon selection either the first side is directed upwardly, permitting control of the at least one button provided on the first side; or the second side is directed upwardly permitting control of the at least one button provided on the second side, or such that upon selection either the first side is directed towards the user position for controlling the at least one button provided on the first side or the second side is directed toward the user position for controlling the at least one button provided on the second side. In particular the second side may comprise more control buttons than the first side. Thus, for example, the first side can be directed upwardly for providing basic control functions, and the second side can be directed upwardly for providing basic as well as more advanced control functions.

According to another aspect of the invention the vision enhancing device is arranged for positioning the light sensitive sensor above the bottom plate, and preferably for positioning the screen above the bottom plate.

A very user friendly vision enhancing device which is able to provide images of all the parts of an object placed on a table top is provided in an embodiment in which the vision enhancing device is arranged for allowing displacement of the table relative to the bottom plate and for allowing displacement of the stand relative to the bottom plate for obtaining a footprint for a respective table top which is about twice its surface area.

In a further embodiment of the invention the light sensitive sensor comprises an overview camera for providing overview recording signals of the object representing an image of the complete object; and a separate optical zoom camera, wherein the optical zoom camera is arranged for, in use, providing enlarged recording signals of the object representing an image of a part of the text and/or the at least one picture on the object, said processing means being arranged for optionally processing the overview recording signals such that the complete object is displayed on the screen, and for optionally processing the enlarged recording signals such that a part of the text and/or the at least one picture is displayed enlarged on the screen. By combining two separate cameras it is possible to extend the zoom range up to e.g. 54x or 27x by using standard available, inexpensive cameras. The overview camera provides a full overview of the object on the screen (for example by a fixed zoom factor 1)) while the optical zoom camera, preferably having a zoom range of 18, can provide a magnification from e.g. 1.5x to 27x or from 3x to 54x. Of course the overview camera may also provide smaller or larger magnifications than zoom factor 1x, depending on the maximal size of the object to be overviewed.

In a further embodiment of a vision enhancing device according to the invention the processing means is arranged for, in use and upon user input, displaying the overview of the object and the enlarged part of the object alternately or simultaneously. In this manner the user can switch from one camera to the other, or simultaneously view the images to quickly find the magnified text on the object.

In a still further embodiment of a vision enhancing device according to the invention the light sensitive sensor further comprises a separate OCR-camera for obtaining OCR-recording signals, wherein the OCR-camera is arranged for, in use, providing the OCR-recording signals representing at least a part of the recorded object to the processing means for performing image analysis and/or image processing, and wherein the processing means are arranged for displaying the image analysis and/or processed images on the screen. In this manner image processing, such as image enhancement, contrast adjustment, or text recognition etc. can be performed by a specifically suited OCR-camera, thereby improving the visibility and the viewable size the images and/or textual information displayed on the screen. Preferably at least two, preferably all, cameras are mounted in a single housing for providing a compact vision enhancing device.

In a further embodiment of the invention a vision enhancing device is provided wherein the object presenting unit further comprises an intermediate mid-table, the table being mounted to the bottom plate via the intermediate mid-table, said intermediate mid-table being mounted on the bottom plate so as to be displaceable back and forth in a first direction of a horizontal plane, said first direction preferably being parallel to the screen, and wherein said table is mounted to the intermediate mid-table so as to be displaceable back and forth in a second direction of a horizontal plane, said second direction being perpendicular to the first direction, said object presenting unit further comprises a user operable first mechanical brake for, upon activation, preventing, or providing resistance to, displacement of the table in the first direction and a user operable second mechanical brake for, upon activation, preventing, or providing resistance to, displacement of the table in the second direction, wherein the mechanical brakes are operable independently from each other. In this manner a robust mechanical brake and friction function can be provided independently for both directions, which mechanical brake can be operated in an easy manner by a user of the vision enhancing device.

Preferably said first mechanical brake comprises a rigid longitudinal ridge fixed on the bottom table, said ridge extending in the first direction, at least a first rigid longitudinal ruler which is swivelably mounted on the intermediate mid-table around a swivel axis that extends in the first direction, and a plunger mounted on the intermediate mid-table, which plunger is - under user control - arranged for being positioned from an idle position to an active position, in which active position the plunger pushes the first ruler against the longitudinal ridge and in which idle position the ruler is free from the longitudinal ridge. Such a first mechanical brake can function effectively and reproducibly over an extended period of time. A particularly mechanical robust and compact vision enhancing device can be realized when the first mechanical brake comprises a wheel arranged for positioning said plunger in the idle position or the active position, said wheel being rotatable by a first worm wheel mounted on the intermediate mid-table, said first worm wheel being rotatable by means of a first control rod, wherein the first control rod is slidable along a longitudinal direction of the first control rod within the first worm wheel. Preferably a free end of the first rod is provided with a first gear wheel which is in engagement with a first rack that is slidably attached to the table in a direction parallel to the first direction.

Preferably said second mechanical brake comprises a rigid longitudinal brake rod attached to the table and extending in the second direction, and a brake shoe, which brake shoe is - under user control - arranged for being positioned from an idle position to an active position, in which active position the brake shoe engages the longitudinal brake rod and in which idle position the brake shoe is free from the longitudinal rod. Such a second mechanical brake can function effectively and reproducibly over an extended period of time. A particularly mechanical robust and compact vision enhancing device can be realized when the second mechanical brake comprises a brake shoe formed by two translatable rotatable brake shoe portions positioned at either side of the longitudinal brake rod, said rotatable brake shoe portions being translatable relative to each other by a second worm wheel mounted on the intermediate mid-table, said second worm wheel being rotatable by means of a second control rod, wherein the second control rod is slidable along a longitudinal direction of the second control rod within the second worm wheel. Preferably a free end of the second control rod is provided with a second gear wheel that is in engagement with a second rack that is slidably attached to the table in a direction parallel to the first direction. Preferably the vision enhancing device is provided with an eccentric that is engaged by the second worm wheel on the one hand for rotation of the eccentric upon rotation of the second worm wheel and which eccentric engages the brake shoe portions such that if the eccentric is rotated by the worm wheel in a first direction, a distance between the brake shoes is decreased for engaging or more engaging the brake rod and such that when the eccentric is rotated by the worm wheel in a second direction opposite to the first direction, the distance between the brake shoes is increased for disengaging or less engaging the brake rod.

In a still further embodiment of a vision enhancing device according to the invention the first rack is connected to a first handle, the second rack is connected to a second handle, said first and second handles being positioned below the recess. In this manner the handles can be positioned at one level, and next to each other, on the table for easy access and engagement by a user, which makes the vision enhancing device extremely user friendly in operation. It is noted that brakes may be arranged for fixing the movable table and/or for (steplessly) controlling the force required for moving the table relative to the bottom plate.

A particularly elegant and mechanical compact construction of the vision enhancing device can be realized when a wheel axle on which the wheel is rotatably mounted and the eccentric axle around which the rotatable eccentric is rotatably mounted coincide with each other.

In an embodiment of a vision enhancing device according to the invention in which the longitudinal brake rod is slidably received in a guiding channel, said guiding channel being mounted on the intermediate mid-table so that the backward and forward movements of the table top can be performed in a reproducible manner over an extended period of time.

To further clarify various aspects of embodiments of the present invention and additional features and advantages of the embodiments, a more particular description of various aspects and features will be rendered with reference to specific embodiments thereof, which are illustrated in the appended drawings. It will be appreciated that these drawings depict only exemplary embodiments of the disclosure and are therefore not to be considered limiting its scope, nor are the figures necessarily drawn to scale.

### BRIEF DESCRIPTION OF THE DRAWINGS

The invention will now be further described with reference to the drawings, wherein:

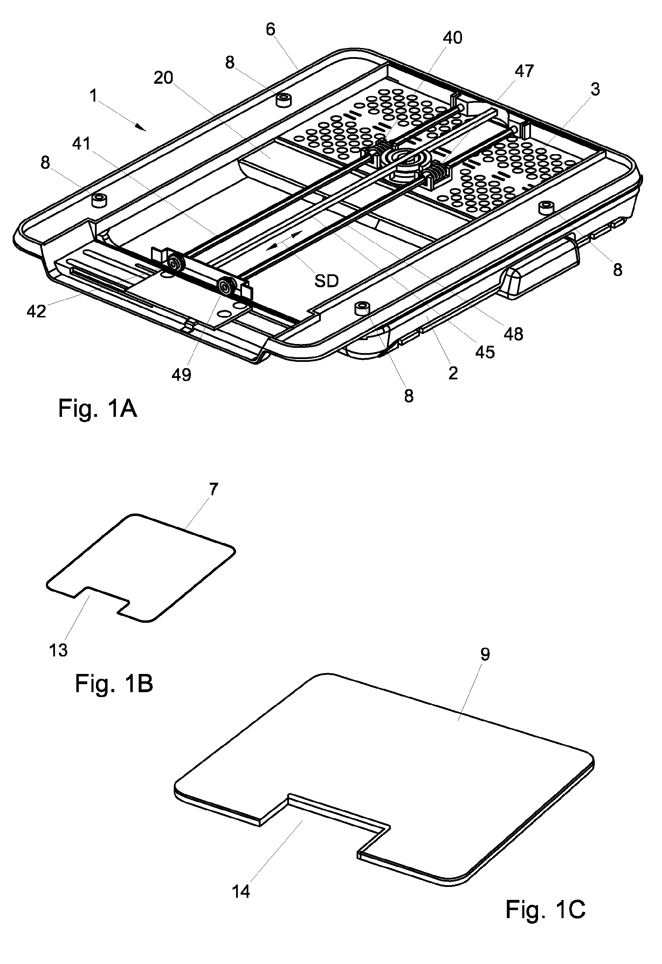

Fig. 1A shows an embodiment of an object presenting unit of a vision enhancing device according to the invention without a table top;
Fig. 1B shows a first table top that can hold an object of A4 size for the object presenting unit of Fig. 1A;
Fig. 1C shows a second table top that can hold an object of A3 size for the object presenting unit of Fig. 1A;

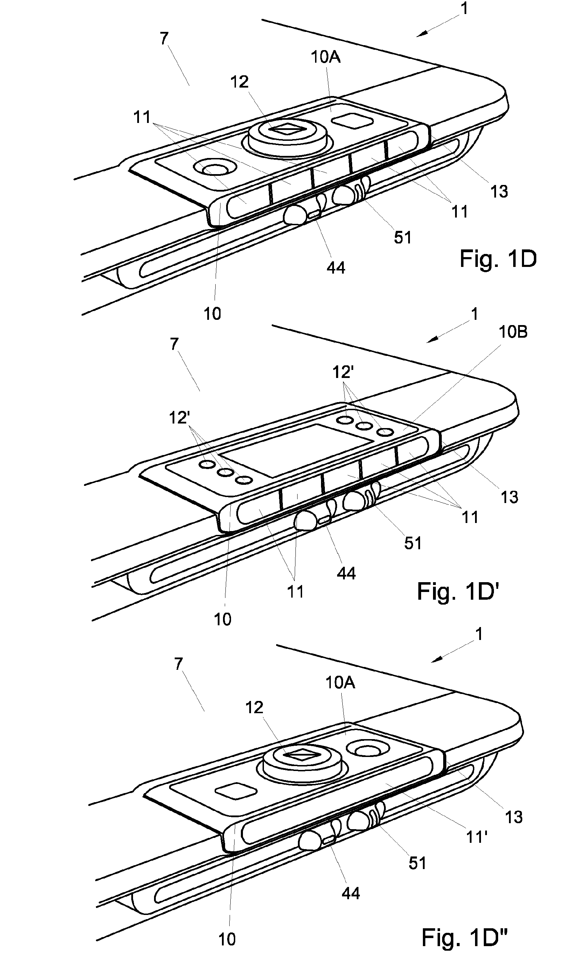

Fig. 1D a portion of the device provided with a control input unit inserted in a first orientation;
Fig. 1D' a portion of the device provided with the control input unit of Fig. 1D inserted in second orientation
Fig. 1D" a portion of the device provided with the control input unit of Fig. 1D inserted in third orientation
Fig. 2A shows an embodiment of a vision enhancing device according to the invention in a rear view in perspective, showing releasable tightening means for fixing the position of the stand relative to the bottom plate;

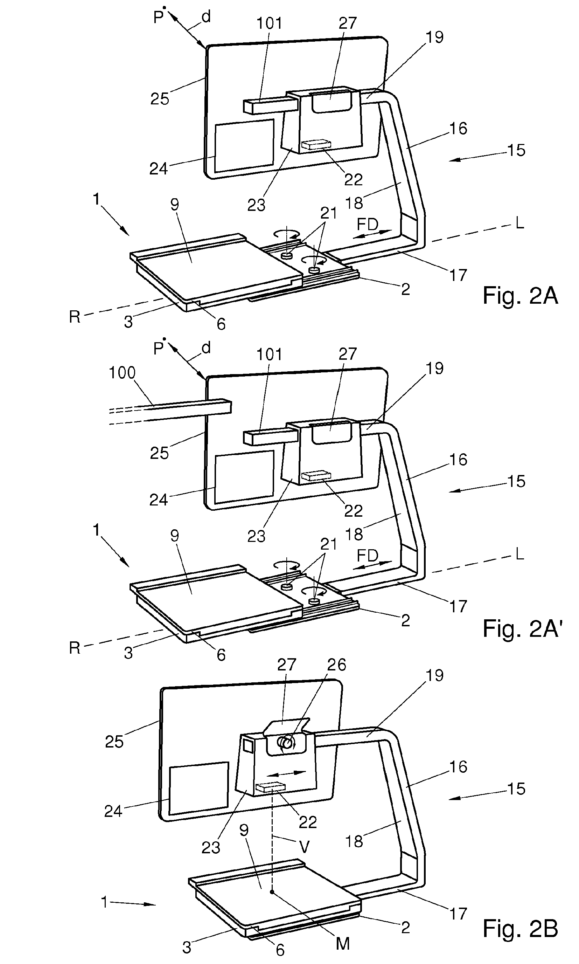

Fig. 2A' shows an alternative embodiment of a vision enhancing device according to the invention in a rear view in perspective, showing releasable tightening means for fixing the position of the stand relative to the bottom plate wherein the screen is attached to a separate stand as is schematically shown.
Fig. 2B shows an embodiment of a vision enhancing device according to the invention in a rear view in perspective showing releasable tightening means for fixing the position of the screen and the light sensitive sensor relative to the stand;

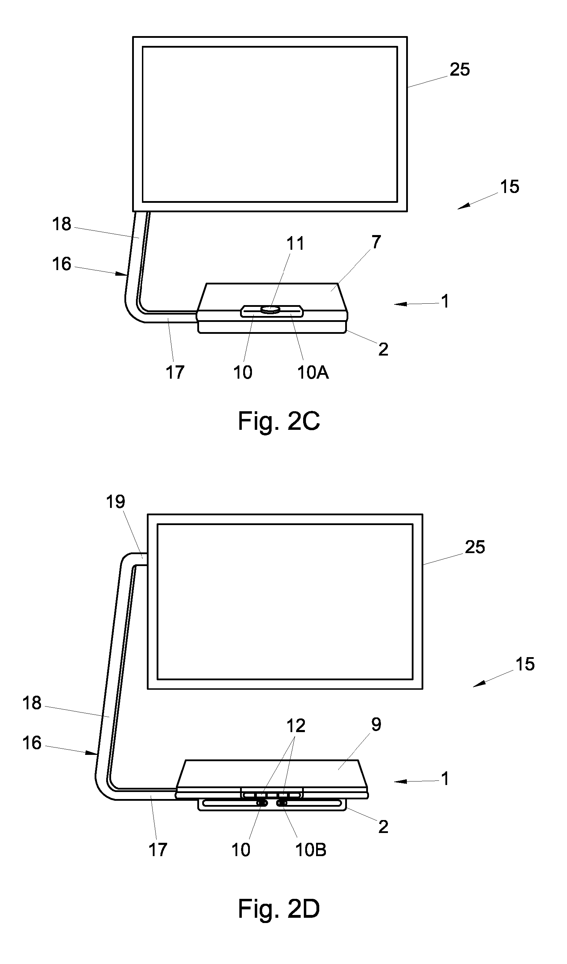

Fig. 2C shows an embodiment of a vision enhancing device according to the invention in a front view in perspective showing an object presenting unit with the first table top of Fig. 1B;
Fig. 2D shows an embodiment of a vision enhancing device according to the invention in a front view in perspective showing an object presenting unit with the second table top of Fig. 1C;

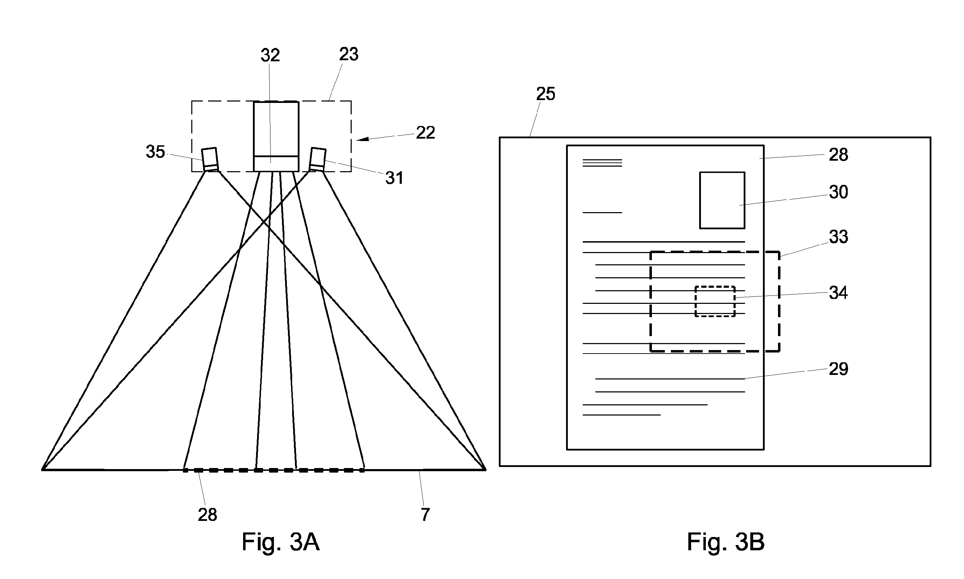

Fig. 3A schematically shows an embodiment of a light sensitive sensor of a vision enhancing device according to the invention comprising a zoom camera, a separate overview camera and a separate OCR camera;
Fig. 3B schematically shows an example of an image of an object displayed on the screen recorded by the light sensitive sensor of Fig. 3A;

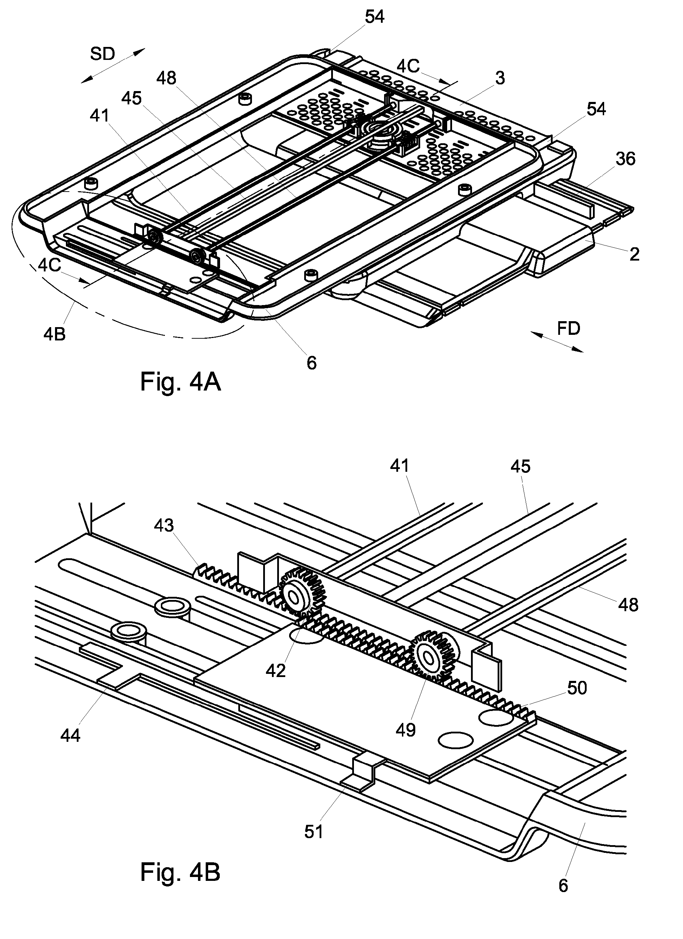

Fig. 4A shows an embodiment of an object presenting unit of a vision enhancing device according to the invention without table top in which the mid-table and the table are displaced sideways relative to the bottom plate;
Fig. 4B shows a part of Fig. 4A in an enlarged view;

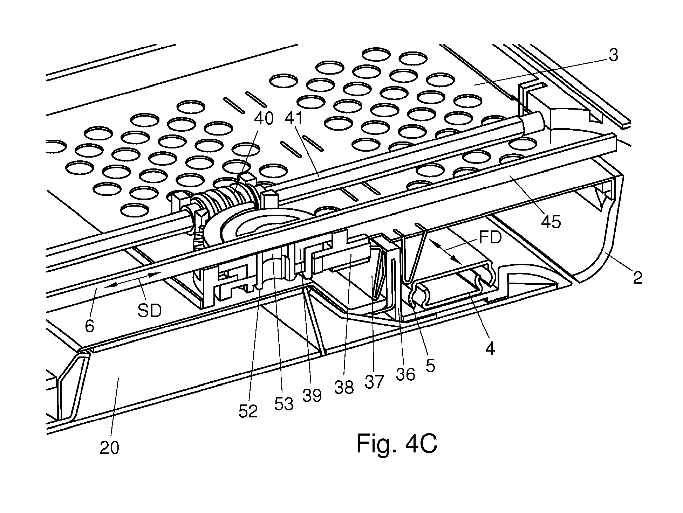

Fig. 4C shows a perspective view partly in cross-section of the object presenting unit of Fig. 4A along the line 4C-4C;

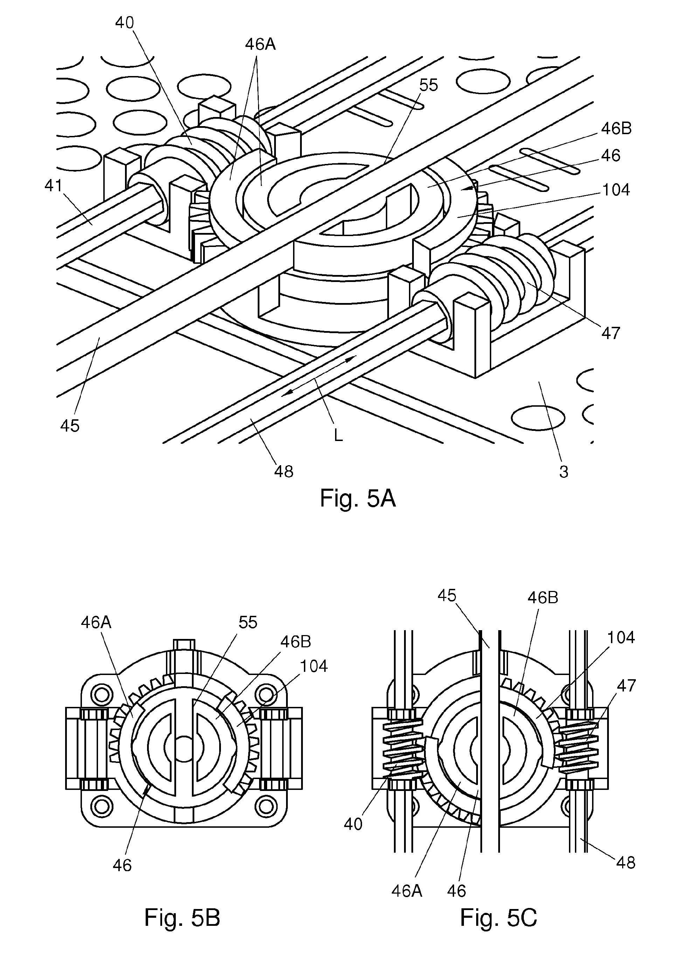

Fig. 5A shows an embodiment of a first and second mechanical brake for independently preventing or providing resistance to displacement of the table in the first and second direction, respectively, in a perspective view;
Figs. 5B and 5C show a top view of the second mechanical brake in an idle position and active position, respectively, for preventing or providing resistance to displacement of the table in the second direction, transverse to the screen;

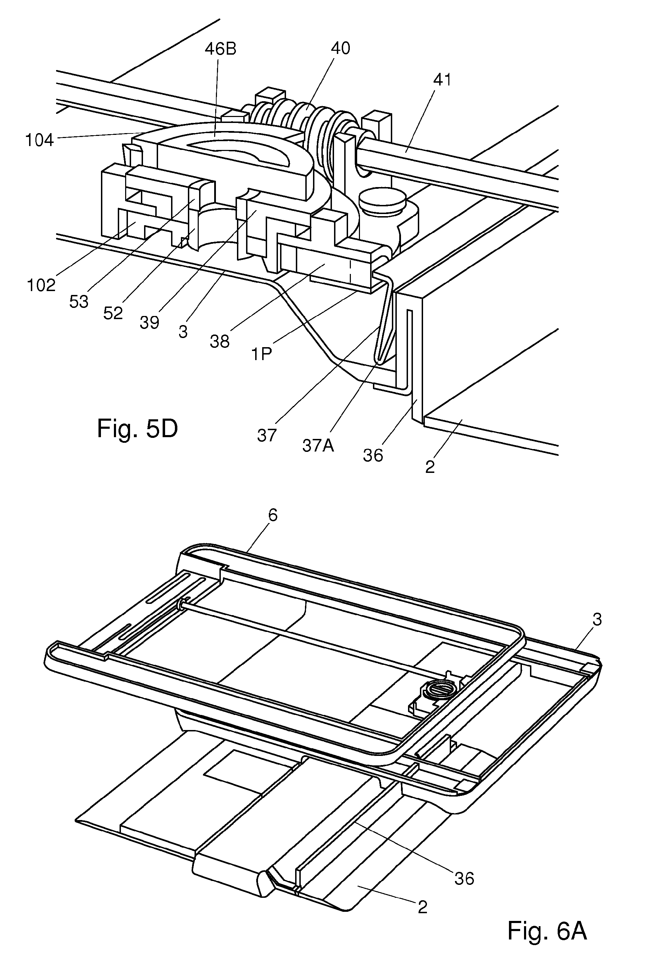

Fig. 5D shows a perspective view partly in cross-section of the first mechanical brake in an active position preventing or providing resistance to displacement of the table in the first direction, parallel to the screen;

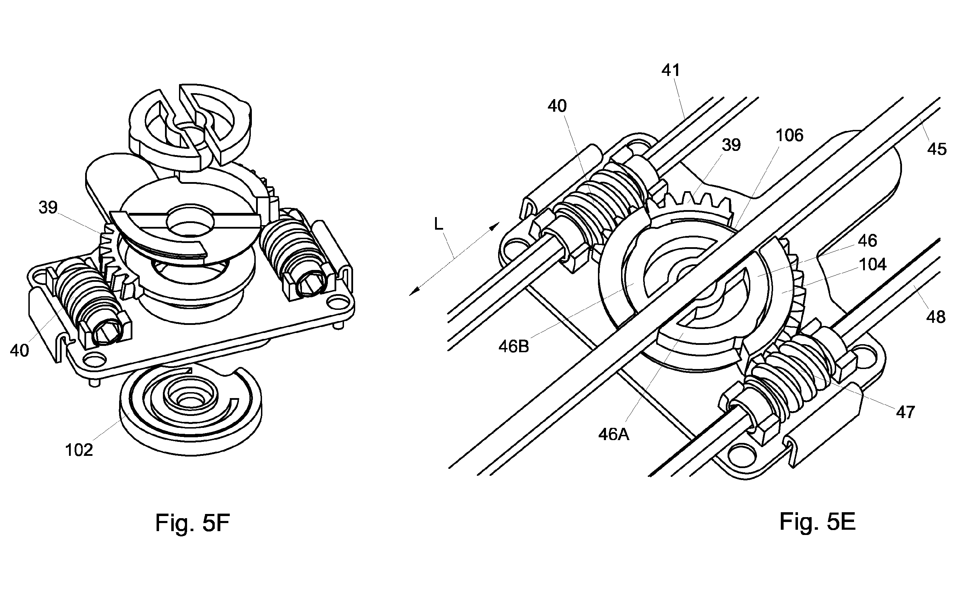

Fig. 5E details of the first and second mechanical brake;
Fig 5F an exploded view of a portion of details of the first and second mechanical brake; and

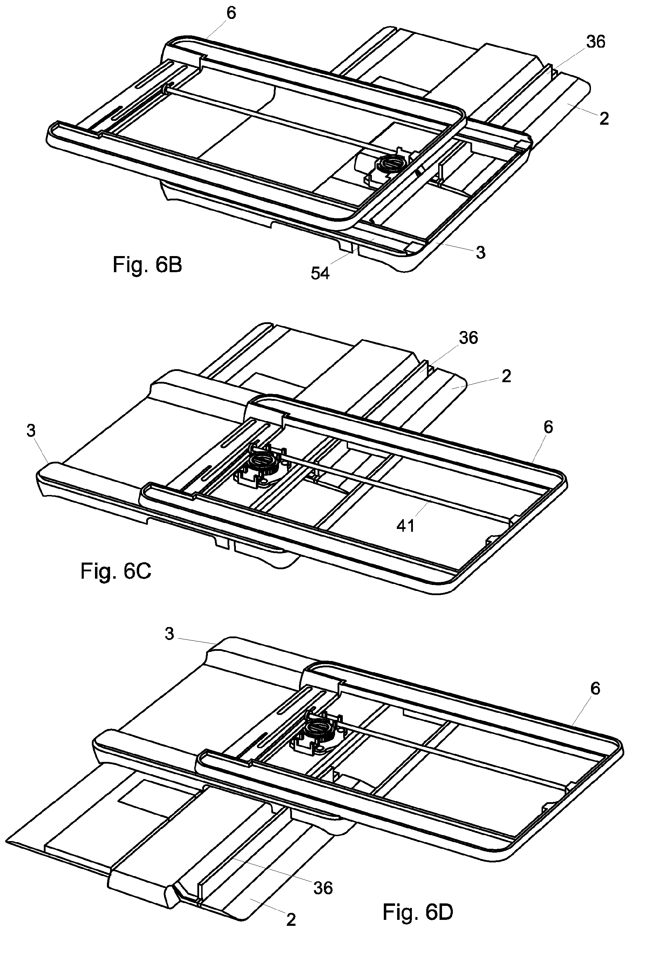

Figs. 6A to 6D schematically show the extreme positions of the table relative to the bottom plate in perspective.

### DETAILED DESCRIPTION OF EXEMPLARY EMBODIMENTS

In Fig. 1A an embodiment of an object presenting unit 1 of a vision enhancing device according to the invention is shown without a table top. The object presenting unit 1 comprises a bottom plate 2 which can e.g. be placed on a desk top or other support surface (not-shown). An intermediate mid-table 3 is mounted on the bottom plate 2 so as to be displaceable back and forth in a first direction (indicated by the arrow FD in Fig. 4C) in a horizontal plane by means of for example a rail construction of which one rail part 4 is attached to the bottom plate 2 and the other rail part 5 is attached to the intermediate mid-table 3 (see Fig. 4C). As shown in e.g. Fig. 1A the object presenting unit 1 further comprises a table 6, which is mounted to the intermediate mid-table 3 so as to be displaceable back and forth in a second direction SD in a horizontal plane, said second direction SD being perpendicular to the first direction FD. In this manner the table 6 is displaceable in two orthogonal directions in a horizontal plane with regard to the bottom plate 2.

A first table top 7 (Fig. 1B) is removably mounted to the table 6 and is arranged for supporting an object, such as e.g. a newspaper, to be displayed on a screen of the vision enhancing device. For removably mounting the first table top 7 the table 6 can be provided with receiving holes 8 for receiving protrusions (not shown), which extend from the bottom surface of the first table 7. In this manner table tops can be interchangeably mounted on the table 3, so that e.g. the first table 7 can be interchanged with a second table top 9 (Fig. 1C), which is likewise arranged for supporting an object and for being removably mountable to the table 6. In the shown embodiment the first table top 7 has a first width dimension and a first length dimension, which can hold a A4 or Letter sized object, and the second table top 9 has a second width dimension and a second length dimension, which can hold an A3 sized object.

In Fig. 1D an object presenting unit 1 is shown with the first table top 7 of Fig. 1B. As can be seen, a user control input unit 10 comprising a number of control buttons 11 and a button 12 is positioned in the object presenting unit 1. The user control input unit 10 controls at least part of the operation of the vision enhancing device and is in this embodiment a wireless unit which is removably mounted to the table 6. For easy access by a user, the user control input unit 10 is accessible in that the table tops 7,9 are each provided with a recess 13, 14 for docking the user control input unit 10. The user control input unit is provided with two opposite sides (10A. 10B) wherein each side is provide with at least one control button 12, 12' respectively. and wherein the vision enhancing device is arranged such that the control input unit can be inserted in the recess 13, 14 with either the first side directed upwardly, for controlling the at least one button provided on the first side, or with the second side directed upwardly for controlling the buttons provided on the second side. The second side comprises more control buttons 12 than the first side (in this example the first side is provided with one button 12). In Figure 1D the control unit is inserted in recess 13 with the first side 10A directed upwardly. However the control unit can also be inserted in the recess 13 with the second side 10B directed upwardly, see Fig. 1D'. Please note that buttons 11 may be deleted. In another embodiment the unit 10 in addition to the plurality of buttons 11 (wherein the unit may also comprise the buttons 12 and/or 12') further comprises at least one button 11' on the backside of the unit, such that upon selection either the front side with the plurality of buttons 11 is directed towards the user position for controlling the buttons 11 (Fig. 1D) or the second side with the at least one button 11' is directed toward a user position for controlling the button 11' (Fig. 1D") when the unit is positioned in the recess 13.

Please note that if table top 9 is located on the table, than the unit 10 may selectively positioned in the recess 14 as discussed above for recess 13. In Figure 2D the control unit is inserted in recess 14 with the second side 10B directed upwardly. However the control unit can also be inserted upside down in the recess 14 with the first side 10A directed upwardly. Also, as discussed above, the unit can be inserted such that the buttons 11'are directed towards the user position.

In Fig. 2A an embodiment of a vision enhancing device 15 according to the invention is shown in a rear view in perspective. The vision enhancing device 15 comprises a light sensitive sensor 22 mounted in a single housing 23, which is mounted to an upstanding stand 16 of the device. The light sensitive sensor 22 can, in use, obtain recording signals of an object placed on a table top which signals are indicative for the text and/or the at least one picture on the object. There exists a direct vision path between the light sensitive sensor and the table if no object is carried by the table. This means for example that no mirror is present between the sensor and the table for capturing an image of an object present on the table. The upstanding stand 16 is attached to the bottom plate 2. A screen 25 is attached to the stand 16. The upstanding stand 16 is positioned (almost completely) at a left side L or right side R of the light sensitive sensor if the device 1 is viewed from a user position P in front of the screen 25. Please note that if the stand is positioned at a left side of the sensor, this does not mean that a relatively small portion 101 of the stand light may be at the right side of the sensor. In the shown embodiment the upstanding stand is C-shaped and comprises a lower horizontal arm 17, an upstanding arm 18 and a horizontal upper arm 19. The bottom plate 2 is provided with a channel 20 (Fig. 4C) for receiving the lower arm 17 of the C-shaped upstanding stand 16, such that the stand 16 is displaceably mounted to the bottom plate 2 in a direction from left to right or vice versa (when viewed from the user position P located at a distance (indicated as d in Fig 2A) in front of the screen), which in the shown embodiment is the first direction FD. This direction FD extends in a horizontal plane parallel to the screen. Thus is holds that the upstanding stand is arranged to be positioned at a left or right side of the sensor and /or (a middle of) the screen (when viewed from a position in front of the screen). The screen may be attached to the stand. Thus in that case it holds that the stand is arranged to be positioned on a left side (as shown in figure 2A) or right side of the sensor (and screen in this example (and a middle of the screen in this example) if the device (and screen in this example) is viewed from a user position in front of the screen if the device screen is attached to the stand.

It is noted that in an alternative embodiment the screen may also be positioned on about the same position as indicated in Fig 2A, however in that case the screen is not attached to the stand, but is for example attached to a second separate stand 100, as shown in Fig. 2A'. Thus in that case it also holds that the stand 16 is arranged to be positioned on a left side (as is shown in Fig. 2A') or right side of the sensor and/ or screen if the device is viewed from a user position P in front of the screen. In that case the sensor 22 and the housing 23 remain attached to the stand 16 as discussed for Fig. 2A.

As indicated in Figure 2A the vision enhancing device 15 comprises releasable tightening means 21, e.g. tightening screws, which are arranged for, when tightened fixing the position of the stand 16, in particular the lower arm 17, relative to the bottom plate 2 and for, when released, allowing displacement of the stand 16 relative to the bottom plate 2.

The vision enhancing device 15 furthermore comprises a light sensitive sensor 22 mounted in a single housing 23, which is mounted to the upstanding stand 16. The light sensitive sensor 22 can, in use, obtain recording signals of an object placed on a table top which signals are indicative for the text and/or the at least one picture on the object. In the shown embodiment the vision enhancing device 15 is provided with processing means 24 for processing the recording signals into video signals, which are supplied to, and can be displayed as an image on, a screen 25 mounted to the upstanding stand 16. In a preferred embodiment the processing means 24 are located within the housing 23 close to the sensor 22. In the shown embodiment the processing means 24 is included in the same housing as the screen 25, but in other embodiments of the invention (not shown) additional processing means can be included in a separate, stand alone personal computer or in the housing that holds the light sensitive sensor.

The screen 25 and the sensor 22 are displaceably mounted to the upper arm 19 in the direction FD from left to right or vice versa so that the light sensitive sensor 22 and the screen 25 can be positioned above the bottom plate 2 and in particular above the table top carrying the object. Thus it holds in this example that the screen 25 and the sensor 22 are displaceably mounted to the upper arm 19 in the direction FD from left to right along a straight line or vice versa so that the light sensitive sensor 22 and the screen 25 can be positioned above the bottom plate 2 and in particular above the table top carrying the object. The light sensitive sensor may be positioned by means of the sensor being displaceably mounted to the upper arm and the bottom plate to be displaecably mounted to the lower arm such that the light sensitive sensor is positioned vertically above (see vertical line V in Fig 2B) a middle M (see Fig 2B) of the table top if the middle of the table top is positioned in the middle of all possible positions the middle of the table top can take due to the displaceability of the table relative to the bottom plate. To releasably fix the position of the screen 25 relative to the upper arm 19 and for after releasing allowing displacement of the screen 25 relative to the upper arm 19 releasable tightening means 26, e.g. tightening screws are provided. In the shown embodiment these tightening screws are positioned in a recess which can be closed by a swivelable cover 27.

According to the invention the upstanding stand 16 is arranged to be positioned at a left or right side of the screen 25, which is clearly indicated in Figs. 2A to 2D. In this manner displacement of the table 6 relative to the bottom plate 2 in combination with displacement of the stand 16 relative to the bottom plate 2 is possible over such a distance that a footprint for a respective table top is obtained that is about twice its surface area thereby making it possible to position any part of the object below the light sensitive sensor for optimal performance of the vision enhancing device.

From Figs. 2C and 2D which show the vision enhancing device 15 in a front view in perspective it can be seen that the appearance of the vision enhancing device is furthermore quite attractive (amongst other due to free space availability behind the device and screen) in addition to having a relatively small footprint, which among other things makes it easier to position the vision enhancing device on a desk top. In the collapsed configuration as shown in Fig 2c for example the table top 7 that can hold an A4 sized object can be used in for example portrait configuration whereas in the expanded configuration shown in Fig 2D for example the table top 9 that can hold an A3 sized object can for example be used in landscape configuration.

As mentioned above the vision enhancing device 15 is used for recording an object 28 (Figs. 3A and 3B) whereon text 29 and/or at least one picture 30 are visible and for displaying the recorded object on the screen 25. For recording the object 28 the light sensitive sensor 22 comprises an overview camera 31 for providing overview recording signals of the object 28, which signals represent an image of the complete object 28, to the processing means 24 for processing the overview recording signals such that the complete object 28 is displayed on the screen 25 as indicated in Fig. 3B in full lines. Furthermore, the sensor 22 comprises a separate optical zoom camera 32 for, in use, providing enlarged recording signals of the object 28 which signals represent an image of a part 33, 34 of the text and/or the at least one picture on the object 28. The processing means 24 can under user control via the user control input unit 10 display such parts of the text and/or the at least one picture enlarged on the screen 25. By combining the two separate cameras 31, 32 it is possible to extend the optical zoom factor up to e.g. 54x while using standard available, inexpensive cameras. The overview camera 31 provides a full overview of the object 28 on the screen 25 while the optical zoom camera 32, in the shown embodiment having a zoom range of 18, can provide a zoom factor (=magnification) from e.g. 3x to 54x. For example the optical zoom camera may have a maximum zoom factor (=magnification) in the range of 6-30, preferably 8-20, more preferably 10-18.

In the embodiment shown in Fig. 3B the processing means 24 is arranged for, in use and upon user input, displaying the overview of the object 28 and the part 33, 34 to be enlarged of the object simultaneously, but the user can also choose a mode of operation in which the overview of the object and the enlarged part of the object are displayed alternately or simultaneously. In this manner the user can switch from one camera to the other or simultaneously view the images to quickly find the magnified text on the object.

The light sensitive sensor 22 according to the embodiment of Fig. 3 further comprises a separate OCR-camera 35 for obtaining OCR-recording signals, wherein the OCR-camera is arranged for, in use, providing the OCR-recording signals representing at least a part of the recorded object 28 to the processing means 24 for performing image analysis and/or image processing on the OCR-recording signals. The image analysis and/or the processed images can be displayed on the screen. The OCR-camera preferably has a wide field of vision and a higher resolution (tailored for OCR processing with an optimum between quality and quantity of the amount of processed textual information. Control buttons for operating the OCR-camera and for choosing specific modes of operation, as well as for controlling other functions of the vision enhancing device, can be installed on the user control input unit 10.

With reference to Figs. 4 and 5 the construction of the object presenting unit 1, in particular user operable mechanical brakes will be described in more detail. The object presenting unit of the vision enhancing device according to the invention comprises a first mechanical brake for, upon activation, preventing or providing resistance to displacement of the table 6 in the first direction FD and a user operable second mechanical brake for, upon activation, preventing or providing resistance to displacement of the table 6 in the second direction SD, wherein the mechanical brakes are operable independently from each other to control displacement in the two opposite direction independently from each other.

The said first mechanical brake comprises a rigid longitudinal ridge 36 fixed on the bottom table 2 and extends in the first direction FD. Furthermore, the first mechanical brake comprises a first rigid longitudinal ruler 37 which is swivelably mounted on the intermediate mid-table 3 around a swivel axis 37A (Fig. 5D), which extends in the first direction FD, and a plunger 38 that is mounted on the intermediate mid-table 3. The plunger 38 is - under user control - arranged for being positioned from an idle position to an active position (shown in Fig. 5D), in which active position the plunger 38 pushes the ruler 37 against the longitudinal ridge 36, thus increasing the friction such that displacement of the table in the first direction FD relative to the bottom plate 2 is completely blocked or at least made more difficult. In the idle position (IP), in which the free end of the plunger 38 takes the position indicated by dotted lines, the ruler 37 is free from the longitudinal ridge 36 and thus displacement in the first direction FD is enabled. The first mechanical brake comprises a first eccentric 102 that is rotatable by means of a wheel 39 on the one hand and acts on the plunger 38 on the other hand for displacing the plunger upon rotation of the first control rod.

The first eccentric 102 of the first mechanical brake can position the plunger 38 either in the idle position or the active position, which eccentric is rotatable by means of a wheel 39 that is rotatable by a first worm wheel 40 mounted on the intermediate mid-table 3. The first worm wheel 40 is rotatable by means of a first control rod 41, which fits into a through hole of the first worm wheel 40. The first control rod 41 is slidable within the first worm wheel 40 in a direction l. A free end of the first rod 41 is provided with a first gear wheel 42, which is in engagement with a first rack 43 that is slidably attached to the table 6 in a direction parallel to the first direction FD. The first rack 43 is connected to a first handle 44 positioned below the recess of a table top mounted on the table. The first handle 44 is user operable to slide the first rack 43 relative to the table 6 as a result of which the first gear wheel 42 is brought into rotation thereby rotating the first worm wheel 40 and the wheel 39 and the first eccentric 102 to position the plunger 38 in the desired position for either enabling or disabling displacement in the first direction FD.

The second mechanical brake comprises a rigid longitudinal brake rod 45 attached to the table 6 and extending in the second direction SD. A brake shoe 46 of the second mechanical brake can - under user control - be positioned in an idle position (Fig. 5B) or an active position (Fig. 5C). In the active position the brake shoe 46 is in engagement with the longitudinal brake rod 45 preventing displacement in the second direction SD and in the idle position the brake shoe 46 is free from the longitudinal brake rod 45 thereby enabling displacement in the second direction SD. In the shown embodiment the second mechanical brake 46 comprises a brake shoe formed by two translatable brake shoe portions 46A, 46B positioned at either side of the longitudinal rod 45. The translatable brake shoe portions 46A, 46B are translatable toward each other and vice versa by means of a rotatable second eccentric 104 that is rotatable by a second worm wheel 47 mounted on the intermediate mid-table 3. The second worm wheel 47 is rotatable by means of a second control rod 48, a free end of which is provided with a second gear wheel 49. The second control rod is slidable within the second worm wheel in the direction l. This second gear wheel 49 is in engagement with a second rack 50, which is slidably attached to the table 6 in a direction parallel to the first direction FD. The second rack 50 is connected to a second handle 51 positioned below the recess of a table top mounted on the table 6. The second handle 51 is user operable to slide the second rack 50 relative to the table 6, as a result of which the second gear wheel 49 is brought into rotation thereby rotating the second worm wheel 47, thereby rotating the second eccentric 104 and thereby translating the brake shoe portions 46A, 46B to position the brake shoe portions in the desired position against or away from the brake rod 45 for either enabling or disabling displacement in the second direction SD.

It can be seen in Figure 5A that the through hole in the worm wheels 40, 47 is polygonal and the shape of the rods 41, 48 matches the shape of the holes so that rotation of the rods by rotating the gear wheels is directly transferred to the worm wheels. Thus it holds that the first mechanical brake comprises the wheel 39 arranged for positioning said plunger 38 in the idle position or the active position, said wheel being rotatable by a first worm 40 wheel mounted on the intermediate mid-table, said first worm wheel being rotatable by means of a first control rod 41 wherein the first control rod is slidable along a longitudinal direction of the first control rod within the first worm wheel. Furthermore it holds that the first mechanical brake comprises a first eccentric 102, which is rotatable by means of the wheel 39 on the one hand, and which acts on the plunger 38 on the other hand, for displacing the plunger upon rotation of the first control rod. A free end of the first control rod is provided with the first gear wheel 42, which is in engagement with the first rack 43, which is slidably attached to the table in a direction parallel to the first direction. Said second mechanical brake comprises the rigid longitudinal brake rod 45 attached to the table and extending in the second direction and the brake shoe 46, which brake shoe is - under user control - arranged for being positioned from an idle position to an active position, in which active position the brake shoe engages the longitudinal brake rod 45 and in which idle position the brake shoe is free from the longitudinal rod. The second mechanical brake comprises a brake shoe formed by two translatable brake shoe portions positioned at either side of the longitudinal brake rod, said rotatable brake shoe portions 46 A, 46B being translatable relative to each other by the second worm wheel 47 mounted on the intermediate mid-table, said second worm wheel being rotatable by means of the second control rod 48 wherein the second control rod is slidable along a longitudinal direction l of the second rod within the second worm wheel.

The vision enhancing device is provided with the second eccentric 104, which is engaged by the second worm wheel on the one hand for rotation of the second eccentric upon rotation of the second worm wheel, and which second eccentric 104 engages the brake shoe portions such that when the second eccentric is rotated by the second worm wheel 47 in a first direction, a distance between the brake shoes is decreased for engaging or more engaging the brake rod and such that if the eccentric is rotated by the worm wheel in a second direction opposite to the first direction, the distance between the brake shoes is increased for disengaging or less engaging the brake rod. The free end of the second control rod is provided with a second gear wheel, which is in engagement with a second rack that is slidably attached to the table in a direction parallel to the first direction. A wheel axle on which the wheel is rotatably mounted, and the axle around which the rotatable first eccentric is rotatably mounted, and the axle around which the rotatable second eccentric is rotatably mounted, coincide with each other (see Fig. 5F). The longitudinal brake rod is slidably received in a guiding channel 106 formed by the braking shoes 46A, 46B , said guiding channel being mounted on the intermediate mid-table. Said first mechanical brake may further comprise a second rigid longitudinal ruler (not shown) which is swivelably mounted on the intermediate mid-table around a swivel axis which extends in the first direction wherein the plunger is - under user control - arranged for being positioned from an idle position to an active position, in which active position the plunger pushes the first and second ruler against opposite sides of the longitudinal ridge and in which idle position the first and the second ruler are free from the longitudinal ridge.

The displacement of the table 6 relative to the intermediate mid-table 3 in the second direction SD is realized in a manner known per se by means of a rail construction 54 (Fig. 4A and Fig 6B). In the embodiment shown e.g. in Fig. 5A the longitudinal rod 45 extending in the second direction SD is slidably received in a guiding channel 55 mounted on the intermediate mid-table 3. This guiding channel 55 not only is beneficial for the reproducibility of the displacement of the table 6 in the second direction SD over an extended period of time, but also positions the longitudinal rod 45 correctly with regard to the brake shoe 46, thereby providing a reliable brake function in the second direction SD.

In Figs. 6A to 6B the extreme positions of the table 6 (for clarity reasons without table top) relative to the bottom plate 2 are shown in perspective footprint. From these figures it is clear that the object presenting unit of the vision enhancing device according to the invention is very user friendly, since a user is able to displace an object on the table relative to the bottom plate and thus relative to the light sensitive sensor for obtaining a footprint formed by possible locations of the table which is about twice the surface area of the table thereby enabling recording of all parts of the object.

## Claims

1. Vision enhancing device for recording an object whereon text and/or at least one picture are visible and for displaying the recorded object on a screen, said vision enhancing device being provided with:
- an object presenting unit comprising a bottom plate carrying a table for supporting an object to be displayed on a screen, said table being mounted to the bottom plate so as to be displaceable in at least opposite directions in a horizontal plane;
- an upstanding stand attached to the bottom plate;
- a light sensitive sensor mounted to the upstanding stand for obtaining recording signals of the object which signals are indicative for the text and/or the at least one picture of the object;
- processing means for processing the recording signals into video signals; and
- a screen preferably mounted to the upstanding stand, which screen, in use, is provided with the video signals for displaying an image of the recorded object on the screen; **characterized in that** the upstanding stand is arranged to be positioned at a left or right side of the light sensitive sensor and/or the screen if the device is viewed from a user position in front of the screen.

2. Vision enhancing device according to claim 1, **characterized in that** the stand is displaceably mounted to the bottom plate in a direction from the left to the right and/or vice versa in a horizontal direction if the device is viewed from a user position in front of the screen.

3. Vision enhancing device according to claim 2, **characterized in that** the vision enhancing device comprises first releasable tightening means arranged for, when tightened fixing the position of the stand relative to the bottom plate and for, when released allowing displacement of the stand relative to the bottom plate.

4. Vision enhancing device according to claim 1, 2 or 3, **characterized in that** the light sensitive sensor and optionally the screen is displaceably mounted to the stand for displacing the light sensitive sensor and if mounted to the stand also the screen relative to the stand from the left to the right and vice versa if the device is viewed from a user position in front of the screen wherein preferably the light sensitive sensor and optionally the screen is displaceably mounted to the stand for displacing the light sensitive sensor and if mounted to the stand also the screen relative to the stand from the left to the right along a straight line and vice versa if the device is viewed from a user position in front of the screen.

5. Vision enhancing device according to claim 4, **characterized in that** the vision enhancing device comprises second releasable tightening means arranged for, when tightened fixing the position of the light sensitive sensor and if mounted to the stand also the screen relative to the stand and for, when released allowing displacement of the light sensitive sensor and/or the screen relative to the stand.

6. Vision enhancing device according to any preceding claim 2-5, **characterized in that** the upstanding stand is C-shaped and comprises a lower horizontal arm, an upstanding arm and a horizontal upper arm, wherein the bottom plate is provided with a connecting member for connecting the lower arm of the C-shaped upstanding stand to the bottom plate wherein the lower horizontal arm and the upper horizontal arm extend from the left to the right in a horizontal plane if the device is viewed from a user position in front of the screen

7. Vision enhancing device according to claim 6, **characterized in that**, the bottom plate is displaceably mounted to the lower arm for displacing the bottom plate relative to the lower arm in two mutually opposite directions along a longitudinal direction of the lower arm, more particularly for displacing the bottom plate relative to the lower arm from the left to the right and vice versa if the device is viewed from a user position in front of the screen and/or if the screen is viewed from a user position in front of the screen if the screen is mounted to the stand.

8. Vision enhancing device according to claims 3 and 7, **characterized in that**, the device is further provided with the first releasable tightening means for, when tightened fixing the position of the bottom plate relative to the lower arm and for, when released allowing displacement of the bottom plate in the two mutually opposite directions along the longitudinal direction of the lower arm

9. Vision enhancing device according to any preceding claim 6-8 **characterized in that** the light sensitive sensor and/or the screen is displaceably mounted to the upper arm for displacing the light sensitive sensor and/or the screen relative to the upper arm in two mutually opposite directions along a longitudinal direction of the upper arm, more particularly for displacing the light sensitive sensor and/or the screen relative to the upper arm from the left to the right and vice versa if the device is viewed from a user position in front of the screen.

10. Vision enhancing device according to claims 5 and 9, wherein the vision enhancing device comprises the second releasable tightening means arranged for, when tightened fixing the position of the light sensitive sensor and/or the screen relative to the upper arm and for, when released allowing displacement of the light sensitive sensor and/or the screen relative to the upper arm.

11. Vision enhancing device according to any preceding claim 6-10, **characterized in that** the longitudinal direction of the lower arm and the longitudinal direction of the upper arm extend from the left to the right in a horizontal direction if the device is viewed from a user position in front of the screen and/or if the screen is mounted to the stand and viewed from a position in front of the screen parallel to the screen.

12. Vision enhancing device according to any preceding claim, **characterized in that** the table is displaceable relative to the bottom plate in at least two first mutually opposite directions laying in a horizontal plane and being directed parallel to the light sensitive sensor and/or the screen,

13. Vision enhancing device according to any preceding claim or according to the preamble of claim 1, **characterized in that**, the vision enhancing device further comprises at least a first table top which is removably mounted to the table, said first table top being arranged for supporting an object to be displayed on the screen.

14. Vision enhancing device according to claim 13, wherein the device comprises interchangeable first and second table tops arranged for supporting an object to be displayed on the screen, said second table top being arranged for being removable mountable to the table.

15. Vision enhancing device according to claim 14, wherein the first table top has a first width dimension and a first length dimension, preferably being able to hold an A4 or Letter sized object and wherein the second table top has a second width dimension and a second length dimension, preferably being able to hold an A3 sized object.

16. Vision enhancing device according to claim 15, **characterized in that**, in use, the first table top is directed in portrait when viewed from a position located at a distance in front of the screen and **in that** the second table top is directed in landscape when viewed from the position located at a distance in front of the screen

17. Vision enhancing device according to any preceding claim 13-16, **characterized in that** the vision enhancing device is arranged for allowing displacement of the table relative to the bottom plate and for allowing displacement of the stand relative to the bottom plate for allowing a footprint formed by all possible positions of a respective table top mounted to the stand which is about twice the surface area of the respective table top.

18. Vision enhancing device according to any preceding claims 14-17, **characterized in that** the vision enhancing device further comprises a user control input unit for controlling at least part of the operation of the vision enhancing device, said user control input unit being releasable attachable to at least one of the table tops, wherein this table top comprises a recess for exposing the user control input unit.

19. Vision enhancing device according to claim 18, **characterized in that** the user control input unit is provided with two opposite sides wherein each side is provided with at least one control button and wherein the vision enhancing device is arranged such that the control input unit can be inserted in the recess such that upon selection either the first side is directed upwardly for controlling the at least one button provided on the first side or the second side is directed upwardly for controlling the at least one button provided on the second side or such that upon selection either the first side is directed towards the user position for controlling the at least one button provided on the first side or the second side is directed toward the user position for controlling the at least one button provided on the second side.

20. Vision enhancing device according to claim 19, **characterized in that** the second side comprises more control buttons than the first side.

21. Vision enhancing device according to claim 19 or 20, **characterized in that** the user control input unit is arranged for wireless communication with the processing means.

22. Vision enhancing device according to any one of the preceding claims or to the preamble of claim 1 **characterized in that**, the device is arranged for positioning the light sensitive sensor above the bottom plate and preferably for positioning the screen above the bottom plate.

23. Vision enhancing device according to any one of the preceding claims or to the preamble of claim 1, wherein the light sensitive sensor comprises an overview camera for providing overview recording signals of the object which signals are representing an image of the complete object and a separate optical zoom camera, wherein the optical zoom camera is arranged for, in use, providing enlarged recording signals of the object which signals are representing an image of a part of the text and/or the at least one picture on the object, said processing means being arranged for processing the overview recording signals such that the complete object is displayed on the screen and for processing the enlarged recording signals such that a part of the text and/or the at least one picture is displayed enlarged on the screen.

24. Vision enhancing device according to claim 23, wherein the optical zoom camera has a maximum zoom factor (=magnification) in the range of 6-30, preferably 8-20, more preferably 10-18.

25. Vision enhancing device according to claim 23 or 24, wherein the processing means are arranged for, in use and upon user input, displaying the overview of the object and the enlarged part of the object alternately or simultaneously.

26. Vision enhancing device according to claim 23, 24 or 25, wherein the light sensitive sensor further comprises a separate OCR-camera for obtaining OCR-recording signals, wherein the OCR-camera is arranged for, in use, providing the OCR-recording signals representing at least a part of the recorded object to the processing means for performing image analysis and/or image processing and wherein the processing means are arranged for displaying the image analysis and/or processed images on the screen.

27. Vision enhancing device according to any one of the claims 23-26, wherein at least two, preferably all the cameras are mounted in a single housing.

28. Vision enhancing device according to any one of the preceding claims or according to the preamble of claim 1, wherein the object presenting unit further comprises an intermediate mid-table, the table being mounted to the bottom plate via the intermediate mid-table, said intermediate mid-table being mounted on the bottom plate so as to be displaceable back and forth in a first direction of a horizontal plane, said first direction preferably extending from the left to the right if the device is viewed from a user position in front of the screen and wherein said table is mounted to the intermediate mid-table so as to be displaceable back and forth in a second direction of a horizontal plane, said second direction being perpendicular to the first direction, said object presenting unit further comprises a user operable first mechanical brake for, upon activation, preventing or providing resistance to displacement of the table in the first direction and a user operable second mechanical brake for, upon activation, preventing or providing resistance to displacement of the table in the second direction, wherein the mechanical brakes are operable independently from each other.

29. Vision enhancing device according to claim 27, **characterized in that** said first mechanical brake comprises a rigid longitudinal ridge fixed on the bottom table, said ridge extending in the first direction, at least a first rigid longitudinal ruler which is swivelably mounted on the intermediate mid-table around a swivel axis which extends in the first direction and a plunger mounted on the intermediate mid-table, which plunger is - under user control - arranged for being positioned from an idle position to an active position, in which active position the plunger pushes the first ruler against the longitudinal ridge and in which idle position the ruler is free from the longitudinal ridge.

30. vision enhancing device according to claim 29, **characterized in that** said first mechanical brake further comprises a second rigid longitudinal ruler which is swivelably mounted on the intermediate mid-table around a swivel axis which extends in the first direction wherein the plunger is-under user control - arranged for being positioned from an idle position to an active position, in which active position the plunger pushes the first and second ruler against opposite sides of the longitudinal ridge and in which idle position the first and the second ruler are free from the longitudinal ridge,

31. Vision enhancing device according to claim 29 or 30, **characterized in that** the first mechanical brake comprises a wheel arranged for positioning said plunger in the idle position or the active position, said wheel being rotatable by a first worm wheel mounted on the intermediate mid-table, said first worm wheel being rotatable by means of a first control rod wherein the first control rod is slidable along a longitudinal direction of the first control rod within the first worm wheel.

32. Vision enhancing device according to claim 31, **characterized in that** the first mechanical brake comprises a first eccentric which is rotatable by means of the wheel on the one hand and which acts on the plunger on the other hand for displacing the plunger upon rotation of the first control rod, wherein the wheel and the first eccentric may be integrated.

33. Vision enhancing device according to claim 31 or 32, **characterized in that**, a free end of the first control rod being provided with a first gear wheel which is in engagement with a first rack which is slidably attached to the table in a direction parallel to the first direction.

34. Vision enhancing device according to any preceding claim 28-33, **characterized in that** said second mechanical brake comprises a rigid longitudinal brake rod attached to the table and extending in the second direction and a brake shoe, which brake shoe is - under user control - arranged for being positioned from an idle position to an active position, in which active position the brake shoe engages the longitudinal brake rod and in which idle position the brake shoe is free from the longitudinal rod.

35. Vision enhancing device according to claim 34, **characterized in that** the second mechanical brake comprises a brake shoe formed by two translatable brake shoe portions positioned at either side of the longitudinal brake rod, said rotatable brake shoe portions being translatable relative to each other by a second worm wheel mounted on the intermediate mid-table, said second worm wheel being rotatable by means of a second control rod wherein the second control rod is slidable along a longitudinal direction of the second rod within the second worm wheel.

36. Vision enhancing device according to claim 35, **characterized in that** the vision enhancing device is provided with a second eccentric which is engaged by the second worm wheel on the one hand for rotation of the second eccentric upon rotation of the second worm wheel and which second eccentric engages the brake shoe portions such that if the second eccentric is rotated by the worm wheel in a first direction, a distance between the brake shoes is decreased for engaging, or more engaging, the brake rod and such that if the eccentric is rotated by the worm wheel in a second direction opposite to the first direction, the distance between the brake shoes is increased for disengaging or less engaging the brake rod.

37. Vision enhancing device according to claim 35 or 36, **characterized in that**, a free end of the second control rod being provided with a second gear wheel which is in engagement with a second rack which is slidably attached to the table in a direction parallel to the first direction.

38. Vision enhancing device according to claims 31 and 36, wherein a wheel axle on which the wheel is rotatably mounted and the axle around which the rotatable first eccentric is rotatably mounted and the axle around which the rotatable second eccentric is rotatably mounted coincide with each other.

39. Vision enhancing device according to any preceding claim 34-38, wherein the longitudinal brake rod is slidably received in a guiding channel, said guiding channel being mounted on the intermediate mid-table.

40. Vision enhancing device according to at least claims 18, 33 and 37, wherein the first rack is connected to a first handle, the second rack is connected to a second handle, said first and second handle being positioned below the recess.

41. Vision enhancing device according to any preceding claim, wherein there exists a direct vision path between the light sensitive sensor and the table if no object is carried by the table.

42. Vision enhancing device according to any preceding claim, wherein the light sensitive sensor is positioned vertically above a middle of the table top if the middle of the table top is positioned in the middle of all possible positions the middle of the table top can take due to the displaceability of the table relative to the bottom plate.
